# EUROPÄISCHE PATENTSCHRIFT

(11) **EP 0 613 563 B1**
(45) Veröffentlichungstag und Bekanntmachung des Hinweises auf die Patenterteilung: **20.08.1997**
(21) Anmeldenummer: 93919003.9
(22) Anmeldetag: 15.09.1993
(51) Int. Cl.: G02B 5/28

(54) **FARBSTICHKOMPENSATIONSFILTER FÜR OPTISCHE GERÄTE MIT BEOBACHTUNGS- UND FOTOSTRAHLENGANG**
COLOUR CAST COMPENSATING FILTER FOR OPTICAL APPLIANCES WITH VIEWING AND PHOTOGRAPHIC BEAM PATHS
FILTRE DE COMPENSATION DE LA PREDOMINANCE CHROMATIQUE POUR APPAREILS OPTIQUES COMPORTANT UNE TRAJECTOIRE OPTIQUE DES RAYONS POUR L'OBSERVATION ET LA PRISE DE VUES

(30) Priorität: 18.09.1992 DE 4231269; 19.09.1992 DE 4231437
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: GUNKEL, Claus, D-35392 Giessen (DE); HISGE, Erwin, D-35630 Ehringshausen (DE)
(74) Vertreter: Stamer, Harald, Dipl.-Phys.
(86) Internationale Anmeldenummer: DE9300867
(87) Internationale Veröffentlichungsnummer: WO9407159

(56) Entgegenhaltungen:
- EP-A- 0 300 579
- EP-A- 0 438 646
- FR-A- 2 358 667

## Beschreibung

Die Erfindung betrifft ein Farbstichkompensationsfilter für optische Geräte mit Beobachtungs- und Fotostrahlengang, insbesondere für Mikroskope. Ein Farbstichkompensationfilter ist aus der Schrift FR-A- 2 358 667 bekannt. Bei komplexen optischen Geräten, die neben einem eigentlichen Beobachtungsstrahlengang unter anderem noch einen Fotostrahlengang aufweisen, kann es erforderlich sein, Farbverfälschungen zu korrigieren, die durch die spektralen Verläufe der verwendeten optischen Bauteile, in Verbindung mit der Gewichtung der Farbempfindlichkeit des Filmmaterials, entstehen. Dabei können in dem Teilstrahlengang, der zum Beobachter hin gerichtet ist (Beobachtungsstrahlengang), andere Farbverfälschungen auftreten als in dem Teilstrahlengang, der der Registrierung (Fotostrahlengang) dient. Bei einem solchen Fall handelt es sich um die Korrektur bzw. Kompensation eines Kombinations- Farbstichfehlers.

Es ist daher die Aufgabe der vorliegenden Erfindung, in den optischen Strahlengang eines derartigen komplexen Gerätes ein Kompensationsfilter einzufügen, welches in unterschiedlichen Wellenlängenbereichen zu definierten Farbstich-Kompensationen führt.

Die Aufgabe wird durch ein Farbstichkompensationsfilter gelöst, welches die im Anspruch 1 aufgeführten Merkmale enthält. Weitere vorteilhafte Ausgestaltungen der vorliegenden Erfindung ergeben sich aus den Unteransprüchen.

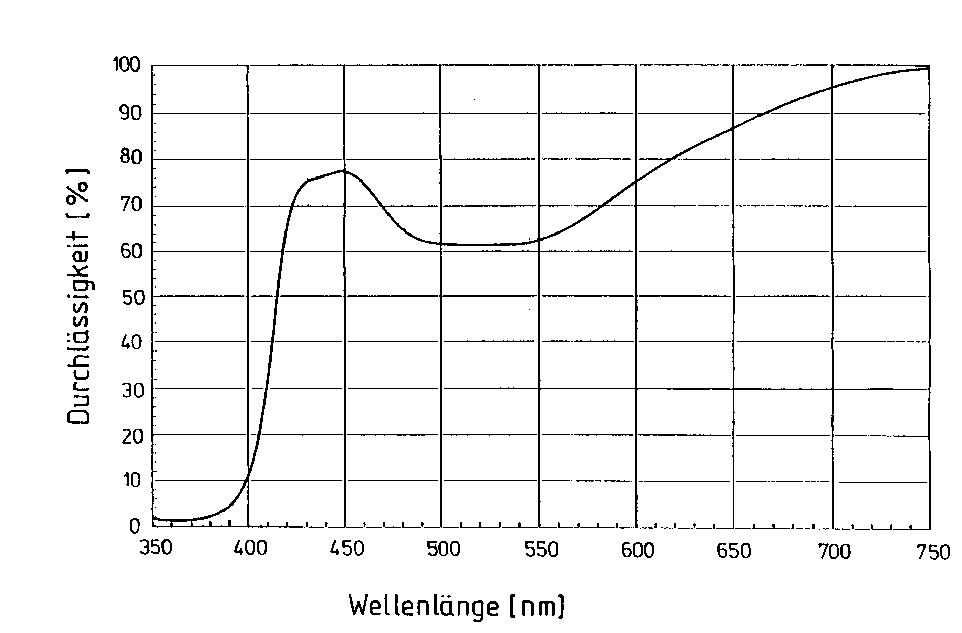

In der Figur ist der spektrale Verlauf des erfindungsgemäßen Interferenzfilterschichtensystems aufgeführt. Man erkennt im Grün-Bereich einen breiten, muldenförmigen Sattel zwischen 470 nm und 580 nm. Dieser Bereich mit einer definierten Transmissions-Reduktion symbolisiert den die Farbe Grün schwächenden Verlauf und ist verantwortlich für die Korrektion der Grün-Stichigkeit.

Die steile Kante zwischen 390 und 430 nm - der 50%-Wert der Transmission liegt bei 423 ± 5 - ist verantwortlich für die Unterdrückung der kürzeren Wellenlängen, sodaß die zusätzliche Blau-Stichigkeit kompensiert wird.

Der Schichtenaufbau ist in der nachfolgenden Tabelle angegeben:

| Schicht-Nr. | Brechzahlen | optische Dicke d (λ = 500 nm) |
|---|---|---|
| 1 | n_{H} = 2,05 | 0,6630 * λ/₄ |
| 2 | n_{L} = 1,38 | 0,4700 * λ/₄ |
| 3 | n_{H} = 2,05 | 2,0773 * λ/₄ |
| 4 | n_{L} = 1,38 | 0,9616 * λ/₄ |
| 5 | n_{H} = 2,05 | 0,9722 * λ/₄ |
| 6 | n_{L} = 1,38 | 0,4910 * λ/₄ |
| 7 | n_{H} = 2,05 | 0,9722 * λ/₄ |
| 8 | n_{L} = 1,38 | 0,4910 * λ/₄ |
| 9 | n_{H} = 2,05 | 0,9722 * λ/₄ |
| 10 | n_{L} = 1,38 | 0,4910 * λ/₄ |
| 11 | n_{H} = 2,05 | 0,9722 * λ/₄ |
| 12 | n_{L} = 1,38 | 0,4910 * λ/₄ |
| 13 | n_{H} = 2,05 | 0,9722 * λ/₄ |
| 14 | n_{L} = 1,38 | 0,4910 * λ/₄ |
| 15 | n_{H} = 2,05 | 0,7495 * λ/₄ |
| 16 | n_{L} = 1,38 | 0,6179 * λ/₄ |
| 17 | n_{H} = 2,05 | 0,3019 * λ/₄ |

Die Teilschicht Nr. 1 grenzt an das Medium Luft (Brechzahl n = 1); die Teilschicht Nr. 17 befindet sich auf dem Glassubstrat mit einer Brechzahl n_{G} zwischen 1,52 und 1,9. Der Einfallswinkel kann zwischen 0° und ± 10° betragen. Mit H ist eine hochbrechende Substanz mit einer Brechzahl n_{H} = 2,05 gemeint, die um den Wert ± 0,05 erweitert werden kann. Dabei handelt es sich um ein Material aus der Gruppe Zirkondioxid (ZrO₂), Tantalpentoxid (Ta₂O₅), Hafnium(IV)-Oxid (HfO₂) bzw. aus einem Gemisch aus Metalloxiden und Seltenen Erd-Oxiden. Das Ma-terial mit der Brechzahl n_{L} = 1,38 ist Magnesiumfluorid (MgF₂).

Wie der Tabelle entnommen werden kann, bilden die Teilschichten 7/8, 9/10, 11/12 und 13/14 identische Wiederholungen des Teilschichten-Systems 5/6.

Mit der hier vorgeschlagenen erfindungsgemäßen Interferenzfilterschicht wird die Intensität des Lichtes für unterschiedliche Wellenlängen-Bereiche definiert geändert, sodaß beispielsweise die Mikro-Fotografien zu einer farbneutralen Wiedergabe der mikroskopierten Objekte führen und zusätzlich auch der visuelle Einblick in ein Mikroskop ein farbneutrales Bild zeigt. Die Interferenzfilterschicht wird auf einer Glasoberfläche aufgebracht, die noch nicht mit einer anderen Funktions-Schicht versehen war. Dies ist beispielsweise bei einer Streuscheibe der Fall, die im Beleuchtungsstrahlengang des optischen Gerätes angeordnet ist. Dabei kann die hier vorgestellte Interferenzfilterschicht vom Grundsatz her auf beiden Seiten der Streuscheibe aufgebracht werden; zweckmäßig ist es jedoch, sie auf der nicht aufgerauhten, planen Seite vorzusehen. Die Streuscheibe steht senkrecht im Strahlengang. Diese an sich übliche Anordnung vereinfacht die vorgeschlagene Schichtenfolge. Ein weiterer Vorteil ist, daß eine Streuscheibe im Vergleich zu anderen optischen Bauelementen leicht zugänglich ist, sodaß ein Ein- und Ausbau nur einen geringen Justieraufwand bedeutet. Damit ist es möglich, auch nachträglich Farbstich-Korrekturen vornehmen zu können, ohne einen größeren Eingriff in die Gesamtanordnung aller optischen Bauteile vornehmen zu müssen. Die Streuscheibe erhält dadurch neben ihrer eigenen Funktion noch eine zusätzliche Funktion, sodaß ein zusätzlicher Substrat-Träger für die Interferenzfilterschicht entbehrlich ist.

Die Streuscheibe befindet sich im Beleuchtungsstrahlengang, und zwar vor der Aperturblende (lampenseitig). Für die Interferenzfilterschicht ist die Lage dabei weitgehend ohne Belang. Wichtig ist nur, daß die Interferenzfilterschicht im Beleuchtungsstrahlengang sitzt, da das durch die Interferenzfilterschicht nicht transmittierte Licht im wesentlichen reflektiert wird.

Es liegt im Rahmen der vorliegenden Erfindung, bei den in der Tabelle und im Anspruch angegebenen optischen Dicken eine Variationsbreite von ± 5% zuzulassen.

Die Herstellung der Interferenzfilterschicht geschieht durch Aufdampfen im Hochvakuum.

## Patentansprüche

1. Farbstichkompensationsfilter für optische Geräte mit Beobachtungs- und Fotostrahlengang, das aus einem mindestens eine plane Fläche aufweisenden, in den Strahlengang des optischen Gerätes bringbaren optischen Glas-Bauteil besteht, das eine Interferenzfilterschicht aufweist, dadurch gekennzeichnet, daß zur Kompensation der Grün-Stichigkeit im Beobachtungsstrahlenbündel sowie zur gleichzeitigen Kompensation der Blau-Stichigkeit im Fotostrahlenbündel die Interferenzfilterschicht folgende Zusammensetzung aufweist:
n_{G} / 0.3019 H / 0.6179 L / 0.7495 H / (0.4910 L / 0.9722 H)5 0.9616 L / 2.0773 H / 0.4700 L / 0.6630 H / 1,
wobei gilt:
n_{G}: Brechzahl des optischen Glas-Bauteils (1,52 - 1,9),
1: Brechzahl n_{L} der Luft,
H: hochbrechende Teilschichten mit einer Brechzahl n_{H} = 2.05,
L: niedrigbrechende Teilschichten mit einer Brechzahl n_{L} = 1.38,
und wobei die vor H und vor L stehenden Faktoren Viertelwellenlängen-Koeffizienten (λ/4) für eine Bezugswellenlänge von λ = 500 nm darstellen.

2. Farbstichkompensationsfilter nach Anspruch 1, **dadurch gekennzeichnet**, daß die niedrigbrechenden Teilschichten der Interferenzfilterschicht aus Magnesiumfluorid (MgF₂) mit einer Brechzahl n_{L} = 1.38 und die hochbrechenden Teilschichten aus mindestens einem der Materialien :
Zirkondioxid (ZrO₂), Tantalpentoxid (Ta₂O₅), Hafnium(IV)-Oxid (HfO₂), Gemisch aus Metalloxiden und Seltene Erden-Oxiden bestehen, wobei die Brechzahl n_{H} = 2.05 ± 0.05 beträgt.

3. Farbstichkompensationsfilter nach Anspruch 1 oder 2, **dadurch gekennzeichnet**, daß das optische Glas-Bauteil als Streuscheibe ausgebildet ist.

4. Farbstichkompensationsfilter nach mindestens einem der vorhergehenden Ansprüche, **dadurch gekennzeichnet**, daß die Streuscheibe im Beleuchtungsstrahlengang eines einen Fotostrahlengang aufweisenden Mikroskops angeordnet ist.

5. Farbstichkompensationsfilter nach mindestens einem der vorhergehenden Ansprüche, **dadurch gekennzeichnet**, daß die Interferenzfilterschicht auf der aufgerauhten Seite der Streuscheibe aufgebracht ist.

6. Farbstichkompensationsfilter nach mindestens einem der vorhergehenden Ansprüche, **dadurch gekennzeichnet**, daß das optische Glas-Bauteil senkrecht zur optischen Achse des Systems austauschbar angeordnet ist.

7. Farbstichkompensationsfilter nach mindestens einem der Ansprüche 1 bis 6, **dadurch gekennzeichnet**, daß der Einfallswinkel für die Interferenzfilterschicht innerhalb des Intervalls (0 ± 10)° liegt.

## Claims

1. Colour cast compensating filter for optical instruments with an observation ray path and a photo ray path, which filter consists of an optical glass component, which displays at least one planar surface and an interference filter layer and which is insertable into the ray path of the optical instrument, characterised thereby, that for compensation for the green cast tendency in the observation ray beam as well as for the simultaneous compensation for the blue cast tendency in the photo ray beam, the interference filter layer has the following composition:
n_{G} / 0.3019 H / 0.6179 L / 0.7495 H / (0.4910 L / 0.9722 H)5 0.9616 L / 2.0773 H / 0.4700 L /0.6630 H / 1,
wherein
n_{G} is the refractive index of the optical glass component (1.52 to 1.9),
1 is the refractive index n_{L} of the air,
H highly refractive part layers with a refractive index n_{H} = 2.05 and
L low-refractive part layers with a refractive index n_{L} = 1.38,
and wherein the factors standing in front of H and L represent quarter wavelength co-efficients (λ/4) for a reference wavelength of λ = 500 nanometres.

2. Colour cast compensating filter according to claim 1, characterised thereby, that the low-refractive part layers of the interference filter layer consist of magnesium fluoride (MgF₂) with a refractive index n_{L} = 1.38 and the highly refractive part layers consist of at least one of the materials of
zirconium dioxide (ZrO₂), tantalum pentoxide (Ta₂O₅), hafnium (IV)-oxide (HfO₂) and a mixture of metal oxides and rare earth oxides, wherein the refractive index amounts to n_{H} = 2.05 ^{±} 0.05.

3. Colour cast compensating filter according to claim 1 or 2, characterised thereby, that the optical glass component is formed as diffusing pane.

4. Colour cast compensating filter according to at least one of the preceding claims, characterised thereby, that the diffusing pane is arranged in the observation ray path of a microscope displaying a photo ray path.

5. Colour cast compensating filter according to at least one of the preceding claims, characterised thereby, that the interference filter layer is applied on the roughened side of the diffusing pane.

6. Colour cast compensating filter according to at least one of the preceding claims, characterised thereby, that the optical glass component is arranged perpendicularly to the optical axis of the system and to be exchangeable.

7. Colour cast compensating filter according to at least one of the claims 1 to 6, characterised thereby, that the angle of incidence for the interference filter layer lies in the range of (0 ^{±} 10)°.

## Revendications

1. Filtre de compensation de l'aspect grisâtre des pigments blancs pour appareils optiques avec trajectoire des rayons d'observation et photographiques, qui se compose d'un élément en verre optique présentant au moins une surface plane, pouvant être mis dans la trajectoire des rayons de l'appareil optique, qui présente une couche de filtre à interférence, caractérisé en ce que, pour la compensation des points dans le vert dans le faisceau des rayons d'observation ainsi que pour la compensation simultanée des points dans le bleu dans le faisceau des rayons photographiques, la couche du filtre à interférence présente la composition suivante :
n_{G} / 0,3019 H / 0,6179 L / 0,7495 H / (0,4910 L / 0,9722 H)5 / 0,9616 L / 2,0773 H / 0,4700 L / 0,6630 H / 1,
où :
n_{G} : indice de réfraction du constituant en verre optique (1,52 - 1,9),
1 : indice de réfraction n_{L} de l'air,
H : couches partielles à fort indice de réfraction avec un indice de réfraction n_{H} = 2,05,
L : couches à plus faible indice de réfraction avec un indice de réfraction n_{L} = 1,38,
et où les facteurs se trouvant devant H et devant L représentent des coefficients de quart de longueurs d'onde λ/₄ pour une longueur d'onde de référence de λ = 500 nm.

2. Filtre de compensation de l'aspect grisâtre des pigments blancs selon la revendication 1, caractérisé en ce que les couches partielles à faible indice de réfraction de la couche de filtre à interférence se composent de fluorure de magnésium (MgF₂) avec un indice de réfraction n_{L} = 1,38 et les couches partielles à fort indice de réfraction se composent d'au moins l'un des matériaux :
bioxyde de zirconium (ZrO₂), pentoxyde de tantale (Ta₂O₅), oxyde d'hafnium (IV) (HfO₂), mélange d'oxydes métalliques et d'oxydes de terres rares,
avec l'indice de réfraction N_{H} = 2,05 ± 0,05.

3. Filtre de compensation de l'aspect grisâtre des pigments blancs selon la revendication 1 ou 2, caractérisé en ce que le constituant en verre optique est configuré comme un verre diffusant.

4. Filtre de compensation de l'aspect grisâtre des pigments blancs selon au moins l'une des revendications précédentes, caractérisé en ce que le verre diffusant est agencé dans la trajectoire des rayons d'éclairement d'un microscope présentant une trajectoire des rayons photographiques.

5. Filtre de compensation de l'aspect grisâtre des pigments blancs selon au moins l'une des revendications précédentes, caractérisé en ce que la couche de filtre à interférence est prévue sur le côté rendu rugueux du verre diffusant.

6. Filtre de compensation de l'aspect grisâtre des pigments blancs selon au moine l'une des revendications précédentes, caractérisé en ce que le constituant en verre est agencé perpendiculairement à l'axe optique du système de façon échangeable.

7. Filtre de compensation de l'aspect grisâtre des pigments blancs selon au moins l'une des revendications 1 à 6, caractérisé en ce que l'angle d'incidence pour la couche de filtre à interférence est compris dans l'intervalle (0 ± 10)°.
